# EUROPÄISCHE PATENTANMELDUNG

(11) **EP 1 336 580 A1**
(43) Veröffentlichungstag der Anmeldung: **20.08.2003**
(21) Anmeldenummer: 03000420.4
(22) Anmeldetag: 10.01.2003
(51) Int. Cl.: B65G 57/30, B65G 59/06

(54) **Stapeleinheit**

(30) Priorität: 14.02.2002 DE 20202243 U
(71) Anmelder: GEBHARDT Transport- und Lagersysteme GmbH, 93413 Cham (DE)
(72) Erfinder: Janker, Rupert, 94372 Rattiszell (DE)
(74) Vertreter: Schieschke, Klaus, Dipl.-Ing.

(57) **Zusammenfassung**

Die Erfindung betrifft eine Stapeleinheit 1 zum stationären Stapeln und Lagern von Transportelementen 2, insbesondere Paletten, mit einer einem Transportelementstapel 3 zugewandten Stapelseite a und einer dem Transportelementstapel 3 abgewandten Antriebsseite b, mit einer Steuereinheit 5, und mit wenigstens einer Hubeinheit 8, wobei wenigstens ein in der Hubeinheit 8 vertikal verfahrbarer Gabelantrieb 10 vorgesehen ist. In dem Gabelantrieb 10 ist eine von der Stapelseite a auf die Antriebsseite b und umgekehrt horizontal verfahrbare Schubgabel 12 zum Untergreifen von Transportelementen 2 geführt wobei die Steuereinheit 5 zur Ansteuerung des Gabelantriebs 10 für die vorhergehende Bewegung und zur Ansteuerung der Hubeinheiten 8 für eine vertikale Bewegung des Gabelantriebs 10 mit der Schubgabel 12 so ausgebildet ist, dass die Schubgabel 12 wenigstens ein Transportelement 2 eines Stapels 3 untergreift und den untergriffenen Stapel 3 anhebt und/oder absenkt.

## Beschreibung

Die Erfindung betrifft eine Stapeleinheit zum Stapeln und Lagern von Transportelementen, vorzugsweise Paletten, nach dem Oberbegriff des Anspruchs 1.

Transportelemente, wie beispielsweise Paletten, finden weitverbreitet Einsatz als Untergestell unter einem zu transportierenden Gut. Solche Paletten können üblicherweise durch Gabel eines Gabelstaplers aufgenommen werden, so dass das auf der Palette gelagerte Gut bewegt und beispielsweise aus einem LKW in eine Lagerhalle umgesetzt werden kann. Die mit den Gütern bewegten Paletten müssen oft bevorratet werden, um sie beispielsweise im Versand in ausreichender Zahl bereitzustellen oder weil die Paletten nach der Ankunft der Güter am Zielort für dessen Transport nicht weiter benötigt werden.

Aus der Praxis ist es bekannt, solche Paletten zu stapeln und je nach Bedarf solchen Stapeln weitere Paletten aufzusetzen oder zu entnehmen. Üblicherweise werden hierfür Gabelstapler eingesetzt, mit welchen die oberste oder mehrere oberste Paletten eines Stapels abgenommen oder auf diesen aufgestellt werden können.

Die Art der Speicherung von Paletten hat jedoch den Nachteil, dass die Stapel nur eine gewisse Höhe erreichen können, in die die Gabel eines Gabelstaplers noch zu bringen sein muss. Je höher der Stapel, um so aufwendiger und teurer sind die Gabelstapler, mit denen die Paletten oben an dem Stapel entnommen oder abgelegt werden können. Weiterhin nachteilig besteht eine Unfallgefahr, die sich aus der Manövrierung der Paletten in großen Höhen ergibt. Die Anforderungen an den Gabelstaplerfahrer sind sehr hoch, wenn das Herabstürzen einzelner Paletten oder gar das Umfallen eines ganzen Stapels vermieden werden soll. Ebenfalls nachteilig ist die Tatsache, dass für die Entnahme oder Speicherung von Paletten ein höherer Zeitaufwand erforderlich ist, wenn diese in großen Höhen vor sich geht. Das genaue und vorsichtige Manövrierung und die Hubzeiten für die Gabel eines Gabelstaplers bis hinauf in die Höhe eines Stapels verzögert den weiteren Arbeitsablauf.

Aufgabe der Erfindung ist es daher, eine Vorrichtung zu schaffen, mit welcher die Speicherung von Transportelementen einfacher, sicherer und zeitsparender vorgenommen werden kann.

Die Aufgabe wird gelöst durch eine Erfindung nach Anspruch 1.

Die Erfindung geht von der Erkenntnis aus, dass es vorteilhaft ist, einen Stapel von Transportelementen nicht zwingenderweise nur von oben zu befüllen bzw. entleeren zu können. Vielmehr besteht mit der erfindungsgemäßen Vorrichtung die Möglichkeit, Transportelemente an einer beliebigen, vorzugsweise der untersten Position eines Stapels zu entnehmen bzw. einzufügen.

Die erfindungsgemäße Stapeleinheit ist dabei vorzugsweise für den stationären Betrieb ausgebildet, so dass unmittelbar angrenzend an die Stapeleinheit wenigstens ein Stapel von Transportelementen, vorzugsweise Paletten, bearbeitet werden kann. Die Stapeleinheit verfügt über wenigstens eine Hubeinheit, in welcher ein Gabelantrieb vertikal verfahrbar ist. Der Gabelantrieb ist dabei vorzugsweise, aber nicht zwingend, bis in die maximale Höhe eines zu verwaltenden Palettenstapels verfahrbar.

In dem Gabelantrieb ist eine Schubgabel gelagert. Die Schubgabel ist im Wesentlichen horizontal verfahrbar, wobei das Maß der Verfahrbarkeit vorzugsweise mindestens der Breite oder der Länge eines Transportelements entspricht. Dadurch kann die Schubgabel in vorteilhafter Weise waagerecht unter eine Palette eines Stapels bewegt werden, ohne dass die gesamte Stapeleinheit selbst bewegt werden muss. Die räumliche Anordnung der Stapeleinheit und des Palettenstapels ist dabei so vorgesehen, dass sich die Hubeinheit entlang einer Längs- oder Querseite des Palettenstapels erstreckt.

Die dem Palettenstapel zugewandte Seite der Hubeinheit sei im Folgenden auch als Stapelseite bezeichnet. Die dem Palettenstapel abgewandte Seite der Hubeinheit, auf der sich vorteilhafterweise auch ein Antrieb für die vertikale Bewegung des Gabelantriebs befindet, sei im Folgenden auch als Antriebsseite bezeichnet. Auf der Antriebsseite ist die Lagerung eines Palettenstapels nicht vorgesehen, in Folge dessen kann sich der Gabelantrieb mit seiner Schubgabel auf dieser Seite der Hubeinheit in vertikaler Richtung ungehindert auf- und abbewegen. Insbesondere kann der in der Hubeinheit vertikal verfahrbare Gabelantrieb mit der auf der Antriebsseite angeordneten Schubgabel in eine vorgebbare vertikale Zielposition gefahren werden.

Diese Zielposition entspricht der Lage einer in einem (auf der Stapelseite aufgestellten) Palettenstapel angeordneten Palette. Über die horizontal verfahrbare Schubgabel kann diese Schubgabel dann von der Antriebsseite quasi durch die Hubeinheit hindurch auf die Stapelseite verfahren werden. Die Schubgabel untergreift dabei die ausgewählte Palette. Eine nachfolgend verursachte Hubbewegung des Gabelantriebs bewirkt, dass die untergriffene Palette und gegebenenfalls weitere, auf dieser Palette aufliegende Paletten, angehoben werden. Der unterhalb der untergriffenen Palette angeordnete Reststapel des ursprünglichen Stapels wird dabei entlastet.

Die Bezeichnung "Reststapel" bezeichnet im Folgenden denjenigen Stapel von Paletten, welcher sich unterhalb der in einen Palettenstapel eingefahrenen Schubgabel befinden. Bei dem Reststapel kann es sich insbesondere auch um eine einzige Palette handeln, wenn die Schubgabel die zweitunterste Palette des Stapels untergreift. Wird die Schubgabel unter das allerunterste Transportelement des Stapels gefahren, so besteht ein eigentlicher Reststapel tatsächlich nicht mehr. Mit der Bezeichnung "Hubstapel" sei im Folgenden derjenige Stapel an Transportelementen gemeint, welcher sich oberhalb der in einen Transportelementstapel eingefahrenen Schubgabel befindet und durch diese angehoben werden kann. Der Reststapel und der Hubstapel ergeben in ihrer Summe also den Stapel, in welchen die Schubgabel eingefahren ist.

Für die Stapeleinheit ist eine Steuereinheit vorgesehen, welche die vertikale Bewegung des Gabelantriebs und die horizontale Bewegung der Schubgabel innerhalb des Gabelantriebs steuert. Insbesondere ist die Steuereinheit also so ausgebildet, dass die Schubgabel auf der Antriebsseite der Hubeinheit vertikal verfahren wird, um dann in einer vorgebbaren Zielposition auf die Stapelseite hinüber in den Stapel bewegt zu werden. Auch auf der Stapelseite kann die Schubgabel natürlich vertikal bewegt werden, wobei ein Anheben normalerweise immer möglich ist, ein Absenken natürlich nur dann, wenn unterhalb der Schubgabel entsprechend Platz für die Bewegung vorhanden ist, insbesondere also ein möglicher Reststapel diese Bewegung nicht blockiert.

Mit der erfindungsgemäßen Stapeleinheit ist vorteilhafterweise möglich, einzelne oder mehrere Transportelemente einem bestehenden Stapel von Transportelementen zuzuführen und zu entnehmen. Diese Transportelemente können in vorteilhafter Weise unterhalb eines angehobenen Hubstapels bzw. oberhalb eines Reststapels eingefügt oder als die obersten Transportelemente eines Reststapels entnommen werden. Insbesondere ist es also nicht erforderlich, die zu speichernden Paletten grundsätzlich auf einen bestehenden Stapel obenauf zu stellen. Durch die beschriebene Vorrichtung ist es ebenso gut möglich, eine oder mehrere Paletten an einer beliebigen Position innerhalb eines Stapels einzufügen oder zu entnehmen. Dazu muss lediglich die Steuereinheit die Hubeinheit bzw. den Gabelantrieb so ansteuern, dass der Hubstapel oberhalb der gewünschten Einfüge- oder Entnahmeposition des Stapels so angehoben wird, dass entweder für das Einfügen der nötige Einfügeplatz entsteht oder für die Entnahme der Reststapel entlastet wird.

Folgendes Beispiel soll die Funktionsweise der Stapeleinheit erläutern:

In einer Lagerhalle sei ein Stapel von zehn aufeinander geschichteten Transportelementen gespeichert, der auf der Stapelseite der erfindungsgemäßen Stapeleinheit angeordnet sei. Durch die Lieferung von Waren seien drei weitere Paletten in das Lager gelangt, die nun in dem Stapel untergebracht werden sollen. Nach Vorgabe des Bedienungspersonals können nun diese drei Paletten in den bestehenden Stapel, beispielsweise zwischen die 4. und 5. Palette, eingefügt werden. Dazu wird die Steuereinheit, welche beispielsweise über ein geeignetes Bedienterminal zu bedienen ist, angewiesen, die Schubgabel der Stapeleinheit auf die Antriebsseite zu bewegen, sofern dies nicht bereits geschehen ist. Sodann wird die Hubeinheit den Gabelantrieb soweit anheben, dass die Gabel in Höhe zwischen der 4. und 5. Palette des Stapels angeordnet ist. Jetzt wird die Schubgabel waagerecht durch die Hubeinheit hindurch so in den Stapel eingefahren, dass die Schubgabel das 5. Transportelement untergreift. Sodann hebt die von der Steuereinheit angesteuerte Hubeinheit den Gabelantrieb mit der Gabel und damit den Hubstapel, der sich aus den ursprünglichen Paletten fünf bis zehn zusammensetzt, um ein vorgebbares Maß in die Höhe, welches mindestens der Höhe der drei einzufügenden Paletten entspricht. Der Reststapel aus den ursprünglichen Paletten eins bis vier bleibt dabei stehen. Jetzt kann ein Gabelstapler die aufeinander gestapelten und einzufügenden neuen drei Paletten auf den Reststapel zwischen diesen und den angehobenem Hubstapel aufsetzen. Als nächstes kann die Steuereinheit die Bewegung des Gabelantriebs so veranlassen, dass sich die Schubgabel vertikal nach unten bewegt und dabei den Hubstapel auf den um drei Paletten ergänzenden Reststapel wieder aufsetzt. Sodann wird die Schubgabel, die nun vom Hubstapel entlastet ist, wieder horizontal auf die Antriebsseite verfahren. Der neue Stapel wurde nun um drei Paletten ergänzt.

Für den Versand einer Ware seien nun die Entnahme von zwei Paletten aus dem neuen Stapel erforderlich. Der Lagerleiter wählt dafür die beispielsweise besonders gut erhaltenen Paletten zwei und drei aus dem neuen Stapel aus. Durch Eingabe über das Bedienerdisplay wird die Steuereinheit dann angewiesen, den Gabelantrieb zunächst so zu verfahren, dass die Schubgabel auf die Höhe der dritten und vierten Palette des Stapels gelangt. Dann wird der Gabelantrieb so gesteuert, dass die Schubgabel waagerecht auf die Stapelseite verfahren wird. Durch eine weitere vertikale Hubbewegung des Gabelantriebs wird der Hubstapel, dessen unterste Palette (die vierte des ehemaligen Stapels) von der Schubgabel untergriffen wird, in die Höhe gehoben. Die oberen beiden Paletten des Reststapels sind dadurch von der Last des Hubstapels befreit. Mit einem Gabelstapler oder gegebenenfalls auch von Hand können nun die Paletten zwei und drei des Reststapels nacheinander oder als kleiner Stapel entnommen werden. Der Reststapel besteht dann nur noch aus einer Palette. Durch eine vertikale Abwärtsbewegung des Gabelantriebs mit seiner Schubgabel wird nun der Hubstapel herabgefahren und auf die einzige Palette des Reststapels aufgesetzt. Auf diese Weise konnte an einer frei wählbaren Stelle innerhalb des Stapels eine ebenfalls frei wählbare Anzahl von Paletten entnommen werden.

In einer besonderen Ausführungsform der Erfindung ist die Stapeleinheit so ausgebildet, dass bei einer Entnahme von Paletten grundsätzlich der gesamte Reststapel entnommen wird, und auch die Einlagerung von Paletten grundsätzlich so erfolgt, dass die einzulagernden Paletten den kompletten Reststapel bilden. Dabei greift der Gabelstapler immer unter die unterste Palette des Reststapels, um diesen vollständig aus dem Stapel zu entnehmen. Auch das Einfügen von Paletten geschieht dann immer unterhalb des ehemaligen Stapels. Dabei wird also zunächst die Schubgabel unter das unterste Transportelement gefahren, um dann den gesamten Stapel anzuheben. Jetzt können eine oder auch mehrere Paletten eingestellt werden, wonach der Hubstapel auf diese eingestellten Paletten wieder abgesetzt wird. Die Entnahme oder Einlagerung erfolgt dann also bevorzugt im Wesentlichen ebenerdig. Dies bringt den Vorteil mit sich, dass das Manövrieren mit dem Gabelstapler vereinfacht wird und entsprechende Gefahren vermieden werden.

In dieser Ausführungsform ist die Stapeleinheit vorteilhafterweise mit wenigstens einer Stapelführung versehen, welche sich auf wenigstens einer Seite des Stapels erstreckt. Die Stapelführung hat dabei die Aufgabe, den Stapel bzw. seine einzelnen Paletten in ihrer horizontalen Anordnung beizubehalten bzw. zu führen.

Besonders vorteilhaft ist die Führung dann ausgebildet, wenn sie sich über mehrere, idealerweise über alle vier vertikalen Kanten des Stapels erstreckt, so dass dieser in keine Richtung ausweichen kann. Die Stapelführung erstreckt sich dabei sinnvollerweise von einer Mindesthöhe bis hinauf zur maximalen vorgesehenen Stapelhöhe, so dass nur die unterhalb der Mindesthöhe angeordneten Paletten eines Stapels keine seitliche Führung erfahren und in waagerechter Richtung entnehmbar sind. Wenn für die Anwendung der Stapeleinheit üblicherweise eine gleichzeitige Entnahme oder Zuführung von nicht mehr als zwei aufeinander gestapelten Paletten vorgesehen sein soll, so erstreckt sich die Stapelführung sinnvollerweise von der Höhe des dritten Stapelelements bis hinauf zur maximal vorgesehenen Stapelhöhe von beispielsweise 25. Unterhalb der Stapelführung können die Paletten dann wie beschrieben entnommen oder zugeführt werden.

In einer vorteilhaften Ausführungsform der Erfindung ist die Stapeleinheit so ausgebildet, dass sie sich im Wesentlichen nur auf einer Seite des Palettenstapels erstreckt. Dies bringt den Vorteil mit sich, dass die Paletten von allen anderen drei Seiten des Stapels diesem zugeführt bzw. entnommen werden können. Bei einer gedachten Draufsicht auf einen quadratischen Palettenstapel mit einer rechts von diesem Stapel angeordneten Stapeleinheit bedeutet dies, dass der die Paletten zuführende oder entnehmende Gabelstapler sowohl von unten als auch von links oder von oben an diesen Stapel heranfahren kann, um Paletten dort zuzuführen oder zu entnehmen.

Besonders vorteilhaft ist die Stapeleinheit dann ausgebildet, wenn die Hubeinheit nicht breiter ist als die Seite der Palette, welche auf der Stapelseite an die Hubeinheit angrenzt. Dann ist die Stapeleinheit sehr vorteilhaft platzsparend einsetzbar.

In einer weiteren Ausführungsform der Erfindung ist die Stapeleinheit mit wenigstens zwei Hubeinheiten ausgerüstet, wobei jede Hubeinheit ihrerseits für die Bedienung eines Palettenstapels vorgesehen ist. Die Hubeinheiten sind dabei so angeordnet, dass ihre jeweilige Stapelseite bzw. Antriebsseite nebeneinander und mit möglichst geringem Abstand angeordnet sind. Dann sind auch die beiden Palettenstapeln mit einem geringen Abstand zueinander entsprechend benachbart. Die Steuereinheit ist in dieser Ausführungsform so ausgebildet, dass sie die beiden Hubeinheiten bzw. die darin geführten Gabelantriebe ansteuert.

Der Vorteil dieser Ausführungsform liegt zum einen darin, dass für beide Hubantriebe und damit auch für beide Palettenstapel nur eine Steuereinheit und entsprechend auch nur ein Bedienteil erforderlich ist. Andererseits ergibt sich der Vorteil, dass mehrere Paletten gleichzeitig in beide Stapel eingefügt oder aus diesen entnommen werden können. Dazu kann die Steuereinheit die beiden Hubeinheiten beispielsweise so ansteuern, dass auf beiden Stapeln in gleicher Höhe die Schubgabeln so eingefahren werden, dass unter den abgehobenen Hubstapeln gleich hohe Reststapel verbleiben. Ein Gabelstapler mit besonders langen Gabeln ist dann in der Lage, zwei hintereinander auf seinen Gabeln angeordnete Paletten gleichzeitig in die beiden Stapel einzusetzen. Selbstverständlich ist es auch möglich, mehrere Palettenpaare übereinander auf dem Gabelstapler so anzuordnen, dass diese auf die freigelegten Reststapel aufgelegt werden können. So ist beispielsweise durchaus denkbar, dass auf dem Gabelstapler zwei benachbarte Stapel von jeweils von drei Paletten angeordnet werden. Der Gabelstapler kann dann so an die beiden benachbarten Stapel der Stapeleinheit herangefahren werden, dass die jeweils einzufügenden drei Paletten gleichzeitig auf die jeweiligen Reststapel aufgesetzt werden können.

Besonders vorteilhaft ist diese Anordnung auch wieder für den Fall, dass die Stapeleinheit für die Entnahme der untersten Paletten eines Stapels ausgebildet ist. Auch dann würden die von dem Gabelstapler zu entnehmenden oder einzufügenden Paletten (diesmal paarweise nebeneinander angeordnet) als zwei "Reststapel" gleichzeitig unterhalb der angehobenen Hubstapel entnommen bzw. als solche eingefügt werden. Dies ist besonders praktisch, einfach und überschaubar, wenn jeweils nur eine Palette pro Stapel in diesen eingefügt oder entnommen werden soll.

Grundsätzlich ist es natürlich denkbar, weitere Hubeinheiten innerhalb einer Stapeleinheit so benachbart anzuordnen, dass auch mehr als zwei Stapel über die Steuereinheit bearbeitet werden können. Mit geeigneten Gabelstaplern oder sonstigen geeigneten Bereitstellungsvorrichtungen können somit auch mehr als zwei nebeneinander angeordnete Paletten gleichzeitig in die jeweiligen Stapel eingebracht oder aus diesen entnommen werden.

In einer vorteilhaften Ausführungsform der Erfindung ist die Steuereinheit so ausgebildet, dass sie mehrere pro Stapeleinheit vorgesehene Hubeinheiten getrennt ansteuern kann, so dass die Zufuhr oder Entnahme von Paletten in jedem Stapel getrennt, in unterschiedlichen Höhen oder auch in unterschiedlicher Anzahl vor sich gehen kann.

In einer vorteilhaften Ausführungsform der Erfindung wird die vertikale Bewegung eines Gabelantriebs und/oder die horizontale Bewegung der Schubgabel über hydraulische oder elektromechanische Elemente bewirkt. Dies bringt den Vorteil einer einfachen und sehr präzise anzusteuernden Bewegung der einzelnen Komponenten, wobei durch geeignete mechanische oder hydraulische Übersetzungsmechanismen auch große Kräfte für das Anheben von schweren Palettenstapeln erzeugt werden können.

In einer vorteilhaften Ausführungsform der Erfindung ist wenigstens ein Sicherheitsdetektor vorgesehen. Der Sicherheitsdetektor verhindert in Verbindung mit der Steuereinheit, dass die Schubgabel von der Stapelseite auf die Antriebsseite verfahren wird, wenn sie gleichzeitig durch einen Hubstapel belastet ist. Auf diese Weise ist sichergestellt, dass die Transportelemente eines angehobenen Hubstapels nicht herabfallen können, weil die Schubgabel fehlerhafterweise auf die Antriebsseite verfahren wurde. Somit wird in vorteilhafter Weise die Gefahr von Sachschäden oder Personenschäden vermieden.

Durch die erfindungsgemäße Vorrichtung wird die Speicherung von Transportelementen so möglich, dass Paletten prinzipiell an einer beliebigen Stelle des Stapels eingefügt oder entnommen werden können. Während die herkömmliche Möglichkeit bestehen bleibt, die Paletten auf den Stapel oben aufzusetzen bzw. von dort abzuheben, ermöglicht die erfindungsgemäße Stapeleinheit zusätzlich die Möglichkeit, Paletten insbesondere am unteren Ende des Stapels zu entnehmen. Je nach Ausführung bzw. nach Ausbildung der Stapelführung ist darüber hinaus, wie zuvor beschrieben, auch die Entnahme oder Zufuhr von Paletten an einer beliebigen Stelle des Stapels möglich.

In einer weiteren vorteilhaften Ausführungsform der Erfindung ist eine Eingabeeinheit zur Übertragung von Daten an die Steuereinheit vorgesehen, welche vorzugsweise mobil ausgeführt ist. Damit kann insbesondere beispielsweise ein Gabelstaplerfahrer die gewünschte Anzahl von einzufügenden oder zu entnehmenden Paletten aus einem Stapel an die Steuereinheit übertragen. Diese kann dann die Stapeleinheit so ansteuern, dass der entsprechend auszubildende Hubstapel abgehoben wird, noch bevor der Gabelstaplerfahrer die Stapeleinheit erreicht. Auf diese Weise werden unnötige Wartezeiten an der Stapeleinheit vermieden, weil die Stapeleinheit selbsttätig die vorbereitende Stapelaufteilung vornimmt. Die Übertragung der Daten an die Stapeleinheit kann dabei vorzugsweise auch per Funk geschehen.

Eine vorteilhafte Ausführungsform der Erfindung wird nachfolgend anhand eines Figurenbeispiels erläutert. Von den Figuren zeigen:
- **Fig. 1a**: Die Seitenansicht einer Stapeleinheit mit einer Hubeinheit, mit abgesetztem Stapel und verfahrener Schubgabel;
- **Fig. 1b**: die Seitenansicht der Stapeleinheit nach Fig. 1a, mit abgehobenem Hubstapel;
- **Fig. 2a**: die schematische Draufsicht auf eine Stapeleinheit mit zwei benachbarten Hubeinheiten und verfahrenen Schubgabeln;
- **Fig. 2b**: die Draufsicht auf die Stapeleinheit gemäß Fig. 2a, mit eingefahrenen Schubgabeln.

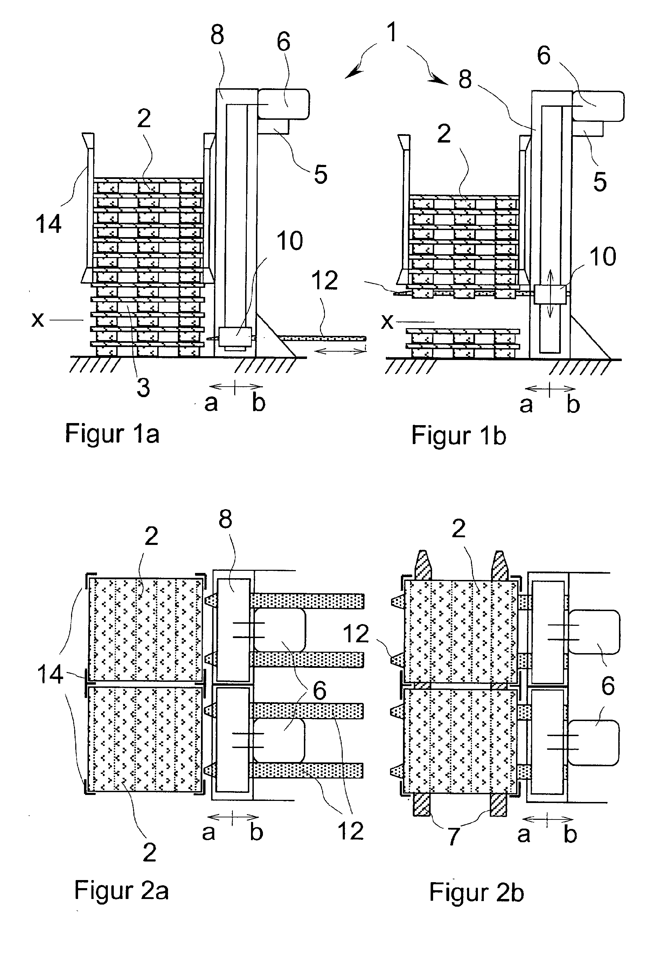

Wie in Fig. 1a zu sehen ist, ist eine Stapeleinheit 1 vorgesehen. Die Stapeleinheit 1 weist eine im Wesentliche senkrechte aufgerichtete Hubeinheit 8 auf. In der Hubeinheit 8 ist ein Gabelantrieb 10 vertikal bewegbar angeordnet und über einen Antrieb 6 in vertikaler Richtung antreibbar. Die Stapeleinheit 1 ist angrenzend an einen Stapel 3, bestehend aus aufeinander gestapelten Transportelementen 2, angeordnet. Die dem Stapel 3 zugewandte Seite der Hubeinheit 8 ist die Stapelseite a. Die dem Stapel abgewandte Seite der Hubeinheit 8 ist die Antriebsseite b.

In dem Gabelantrieb 10 ist eine horizontal bewegliche Schubgabel 12 gelagert. Der Gabelantrieb 10 bewegt die Schubgabel 12 von der Stapelseite a auf die Antriebsseite b oder zurück. Die Schubgabel 12 ist dabei so ausgebildet, dass sie bei einer Bewegung von der Antriebsseite b hinüber zur Stapelseite a ein Transportelement 2 eines Stapels 3 untergreifen kann.

Die Transportelemente 2 des Stapels 3 werden von Stapelführungen 14 in ihrer horizontalen Beweglichkeit begrenzt. Sie erstrecken sich dabei im Wesentlichen entlang der durch die übereinander liegenden Transportelemente gebildeten Kanten des Stapels 3, wobei sie nicht bis auf die in den Figuren 1a und 1b dargestellten Aufstellflächen für den Stapel 3 bzw. die Stapeleinheit 1 herabreichen.

Der Einsatz der Stapeleinheit 1 geht nun wie folgt vor sich:
1. Ein Stapel 3 mit einer bestimmten Anzahl von Transportelementen 2 steht neben der Stapeleinheit 1 bereit.
2. Die untersten beiden Transportelemente 2 des Stapels 3 sollen entnommen werden.
3. Eine Steuereinheit 5 steuert den Gabelantrieb 10 so an, dass die Schubgabel 12 auf die Antriebsseite b gefahren wird.
4. Die Steuereinheit 5 steuert die Hubeinheit so an, dass der Gabelantrieb 10 in Höhe einer Position x gefahren wird, welche durch die Anzahl der zu entnehmenden Transportelemente bestimmt ist.
5. Die Steuereinheit 5 steuert den Gabelantrieb 10 so an, dass die Schubgabel 12 von der Antriebsseite b durch die Hubeinheit 8 hindurch auf die Stapelseite a gefahren wird, wobei die Schubgabel 12 die dritte Palette von unten des Stapels 3 untergreift.
6. Die Steuereinheit 5 steuert die Hubeinheit 8 so an, dass der Gabelantrieb 10 um ein vorgebbares Maß emporgehoben wird, wobei sich der Stapel 3 in einen unteren Reststapel und einen oberen Hubstapel aufteilt. Der untere Reststapel entspricht dabei der Anzahl der zu entnehmenden Transportelemente 2. Die Position des Gabelantriebs 10 und der beiden übereinander angeordneten Stapel ist in Fig. 1b dargestellt.
7. Ein nicht näher dargestellter Gabelstapler kann nun die beiden übereinander gestapelten Paletten 2 unterhalb des angehobenen Hubstapels entnehmen.
8. Die Steuereinheit 5 steuert anschließend die Hubeinheit 8 so an, dass der Gabelantrieb 10 herabgesenkt wird, so dass der verbleibende Hubstapel vollständig unten abgesetzt und die Schubgabel 12 entlastet werden kann.
9. Die Steuereinheit 5 steuert nun den Gabelantrieb 10 so an, dass die Schubgabel 12 von der Stapelseite a zurück auf die Antriebsseite b bewegt wird.

In Fig. 2a ist eine weitere Ausführungsform der Stapeleinheit 1 dargestellt, wobei hier zwei unmittelbar benachbarte Hubeinheiten mit ihren jeweiligen Gabelantrieben und Schubgabeln dargestellt ist. Wie in der Draufsicht der Fig. 2a und 2b zu erkennen ist, sind auch hier die Schubgabeln 12 wieder in horizontaler Richtung verfahrbar, wobei jedes Hubelement und jeder Gabelantrieb durch die Steuereinheit 5 getrennt oder auch gleichzeitig angesteuert werden kann.

Fig. 2a zeigt dabei die Stapeleinheit 1 mit jeweils auf die Antriebsseite b gefahrenen Schubgabeln 12, wohin gegen in Fig. 2b die Stapeleinheit 1 mit auf die Stapelseite a bewegten Schubgabeln 12 dargestellt ist. In dieser doppelten Anordnung der Hubeinheiten können vorteilhafterweise die Paletten 2 der beiden benachbarten Stapel 3 gleichzeitig aus den Stapeln entnommen oder in diese wieder eingefügt werden. Bei entsprechend lang ausgeformten Gabeln 7 eines nicht dargestellten Gabelstaplers können diese Paletten dann beispielsweise von dem Gabelstapler aufgenommen bzw. abgestellt werden, in dem dieser aus der analog zur Figurendarstellung unteren Richtung an die Stapeleinheit 1 heran fährt.

## Patentansprüche

1. Stapeleinheit (1) zum stationären Stapeln und Lagern von Transportelementen (2), insbesondere Paletten,
a) mit einer einem Transportelementstapel (3) zugewandten Stapelseite (a) und einer dem Transportelementstapel (3) abgewandten Antriebsseite (b), und
b) mit einer Steuereinheit (5), und
c) mit wenigstens einer Hubeinheit (8), wobei wenigstens ein in der Hubeinheit (8) vertikal verfahrbarer Gabelantrieb (10) vorgesehen ist,
**dadurch gekennzeichnet**,
d) dass in dem Gabelantrieb (10) eine von der Stapelseite (a) auf die Antriebsseite (b) und umgekehrt horizontal verfahrbare Schubgabel (12) zum Untergreifen von Transportelementen (2) geführt wird, und
e) dass die Steuereinheit (5)
e1) zur Ansteuerung des Gabelantriebs (10) für eine Bewegung gemäß d) und
e2) zur Ansteuerung der Hubeinheiten (8) für eine vertikale Bewegung des Gabelantriebs (10) mit der Schubgabel (12)
so ausgebildet ist, dass die Schubgabel (12) wenigstens ein Transportelement (2) eines Stapels (3) untergreift und den untergriffenen Stapel (3) anhebt und/oder absenkt.

2. Stapeleinheit nach Anspruch 1, **dadurch gekennzeichnet, dass** die Stapeleinheit (1) zur Aufnahme oder Entnahme wenigstens eines Transportelements (2) unterhalb einer vorgebbaren Position innerhalb eines Stapels (3) ausgebildet ist, wobei die Hubeinheit (8) zur Anhebung und Absenkung aller oberhalb der Position gestapelten Transportelemente (2) durch die Steuereinheit (5) ansteuerbar ist.

3. Stapeleinheit nach einem der vorigen Ansprüche, **dadurch gekennzeichnet, dass** sich die Hubeinheit (8) im wesentlichen nur auf einer von vier Seiten des jeweiligen Stapels (3) erstreckt.

4. Stapeleinheit nach einem der vorigen Ansprüche, **dadurch gekennzeichnet, dass** wenigstens zwei benachbarte Hubeinheiten (8) für wenigstens zwei benachbarte Stapel (3) vorgesehen sind.

5. Stapeleinheit nach Anspruch 4, **dadurch gekennzeichnet, dass** die Steuereinheit (1) zur parallelen Ansteuerung der wenigstens zwei Hubeinheiten (8) mit ihren Gabelantrieben (10) so ausgebildet ist, dass in den wenigstens zwei Stapeln (3) horizontal benachbarte Transportelemente (2) gleichzeitig zur Entnahme aus den Stapeln (3) freigebbar und/oder horizontal benachbart ausgerichtete Transportelemente (2) gleichzeitig in die wenigstens zwei Stapel (3) aufnehmbar sind.

6. Stapeleinheit nach einem der vorigen Ansprüche, **dadurch gekennzeichnet, dass** wenigstens eine Stapelführung (14) zur seitlichen Führung der Stapel (3) vorgesehen ist.

7. Stapeleinheit nach einem der vorigen Ansprüche, **dadurch gekennzeichnet, dass** die wenigstens eine Hubeinheit (8) über hydraulische oder elektromechanische Hubelemente bewegt wird.
